# DEMANDE DE BREVET EUROPEEN

(11) **EP 3 574 804 A1**
(43) Date de publication de la demande: **04.12.2019**
(21) Numéro de dépôt: 19176374.7
(22) Date de dépôt: 24.05.2019
(51) Int. Cl.: A47B 96/02, F21V 33/00, B32B 17/10, A47B 96/20, F21W 131/00, F21Y 115/10

(54) **PANNEAU VITRÉ LUMINEUX A DIODES ELECTROLUMINESCENTES**

(30) Priorité: 31.05.2018 FR 1854706
(71) Demandeur: Saint-Gobain Glass France, 92400 Courbevoie (FR)
(72) Inventeur: CRAVERO, Louis, 60200 Compiègne (FR); WOLFF, Richard, 60190 Pronleroy (FR); BARLET, Marina, 60200 Compiègne (FR)
(74) Mandataire: Saint-Gobain Recherche

(57) **Abrégé**

La présente invention concerne un panneau vitré lumineux (100) comportant un vitrage, des diodes couplées à la tranche et dans un profilé, des câbles électriques dans le profilé et deux bandes électroconductrices sur la première face principale du vitrage.

## Description

L'invention concerne un panneau vitré lumineux à l'aide de diodes électroluminescentes en tant que sources lumineuses.

Il est connu de réaliser une tablette lumineuse pourvues de diodes électroluminescentes ou DEL (LED en anglais) en tant que système lumineux, les DEL étant agencées sur la tranche du vitrage sur une carte de circuit imprimé, diodes et support de diodes étant logé sur dans un profilé en U fixé au vitrage. Le vitrage comporte en outre des moyens de diffusion de la lumière. L'alimentation électrique quant à elle est réalisée par des câbles électriques raccordés au circuit électrique sur la carte PCB et à une source électrique.

L'invention a donc pour but de proposer un nouveau panneau vitré lumineux à base de DEL sur la tranche d'un vitrage dont l'alimentation électrique soit simplifiée et même davantage pérenne.

Selon l'invention, le panneau vitré lumineux, en particulier tablette lumineuse comporte :
- un vitrage (plan plutôt que bombé de préférence) de préférence d'épaisseur E0 d'au plus 20mm, même d'au plus 10mm ou encore 5mm, comportant au moins une première feuille de verre de préférence d'épaisseur E1 d'au plus 20mm, même d'au plus 10mm ou encore 5mm (notamment E1=E0) et de préférence de longueur L0 d'au moins 10cm d'au moins 20cm et de largeur W0 d'au moins 5cm et même d'au moins 10cm, de préférence verre minéral mieux clair ou extraclair (sodocalcique etc), notamment carrée ou rectangulaire, le vitrage présentant des première et deuxième faces principales externes opposées et une tranche dite tranche de couplage notamment destinée à être la tranche de façade (tranche avant) en particulier pour la tablette lumineuse, de préférence qui est la tranche longitudinale, et notamment des première et deuxième tranches de part et d'autre de la tranche de couplage, de préférence tranches latérales (et tranche de couplage longitudinale, en particulier d'un verre minéral rectangulaire)
- des diodes électroluminescentes avec des faces émettrices de la lumière (notamment de largeur d'au plus 10mm) couplées optiquement à la tranche de couplage, par exemple faces espacées d'au plus 5mm de la tranche de couplage ou collées à la tranche de couplage avec les faces à une distance d'au plus 5mm, les diodes étant sur un support dit support de diodes notamment diélectrique porteur (sur une face principale avant) d'un circuit d'alimentation électrique des diodes, les diodes électroluminescentes étant alimentées en continu à une tension d'au plus 50V, mieux d'au plus 30V et même d'au plus 13V
- un système de câblage électrique d'alimentation des diodes comprenant :
   - un premier câble électrique avec une première polarité (par exemple le +), comportant une première extrémité et une deuxième extrémité opposée, première extrémité notamment en liaison électrique (en liaison directe ou indirecte via un premier connecteur dépassant du support de diodes) avec une première partie du circuit d'alimentation électrique (de préférence en périphérie du support, sur un premier côté)
   - un deuxième câble électrique avec une deuxième polarité distincte de la première polarité (par exemple le -), une extrémité dite troisième extrémité et avec une extrémité opposée dite quatrième extrémité notamment en liaison électrique (en liaison directe ou indirecte via un deuxième connecteur dépassant du support de diodes) avec une deuxième partie du circuit d'alimentation électrique distincte et isolée de la première partie (de préférence en périphérie du support, sur un côté du support de préférence opposé au premier coté),
- de préférence des moyens de diffusion (permanents ou amovibles) et agencés sur l'une des première ou deuxième faces principales externes ou au sein du vitrage notamment de la première feuille de verre, assurant l'extraction de la lumière guidée dans le vitrage, les moyens de diffusion définissant une ou des zones lumineuses, la première feuille de verre formant guide de lumière
- un profilé - notamment en L ou de préférence en U ou C vers le vitrage-, notamment en matériau opaque, profilé de préférence masquant le support et les diodes, notamment profilé métallique ou diélectrique par exemple plastique et de préférence avec ajout d'une bande métallique pour dissiper la chaleur entre la base et la face arrière du support de diodes (notamment diélectrique) maintenu (par exemple par chaussage, par collage) sur le vitrage par la tranche et/ou l'une ou les première et deuxième faces principales externes, profilé comportant :
   - une base allongée, notamment rectangulaire, en regard et le long de la tranche de couplage de préférence sans dépasser ou d'au plus 10mm ou d'au plus 5mm de chaque côté de la tranche de couplage ou même affleurant ou même de même longueur que la tranche de couplage, le support de diodes et les diodes électroluminescentes étant entre la base et la tranche de couplage, en particulier base d'épaisseur d'au plus 10mm et même au plus 5mm, de préférence le support de diodes est de longueur inférieure à la longueur de la base, notamment laissant deux zones d'extrémités de part et d'autre du support de diodes par exemple d'au moins 1mm ou 10 mm
   - une première aile en regard et sur la première face principale externe et même solidaire de la première face principale externe, de préférence qui est la face inférieure et horizontale en position montée, première aile de préférence allongée de longueur identique à la base (et même profilé de préférence de section constante en L ou U), en particulier première aile d'épaisseur au plus 10mm et même au plus 5mm
   - et de préférence une deuxième aile en regard et sur la deuxième face principale externe, et même solidaire de la deuxième face principale externe, de préférence face supérieure et horizontale en position montée, deuxième aile de préférence allongée de longueur identique à la base (profilé de préférence de section constante, en U), en particulier première aile d'épaisseur au plus 10mm et même au plus 5mm.

En outre selon l'invention, les premier et deuxième câbles électriques ne dépassent pas du profilé, en particulier :
- dans une zone du vitrage adjacente au profilé
- ou sur la première et la deuxième tranche adjacentes à la tranche de couplage
- ou encore des extrémités latérales du profilé parallèlement à la tranche de couplage (par exemple vers les flancs d'un meuble, etc).
En somme, les premier et deuxième câbles électriques ne dépassent pas de la base (par les petits cotés et/ou par le grand coté) ni de de la première aile (par les petits cotés et/ou le grand coté) et de l'éventuelle deuxième aile (par les petits cotés et/ou le grand coté).
De préférence les premier et deuxième câbles électriques (fils notamment gainés sauf aux extrémités) sont d'épaisseur d'au plus 5mm.

Le panneau vitré lumineux selon l'invention comprend en outre:
- une première zone électroconductrice (sans câble ..), de préférence en bande, sur la première face principale externe et éventuellement dépassant sur la tranche de couplage, notamment comportant un premier film électroconducteur autoportant fixé (par collage etc) à la première face principale externe et éventuellement dépassant et fixé sur la tranche de couplage et/ou un premier revêtement électroconducteur sur la première face principale externe et éventuellement dépassant sur la tranche de couplage, première zone électroconductrice de préférence en bordure périphérique de la première face principale externe comportant :
- une première région dite d'interconnexion en regard du profilé, de préférence sur la première face principale externe et en regard de la première aile, voire sur la tranche de couplage, la deuxième extrémité étant en liaison électrique avec ladite première région d'interconnexion
- prolongée par une première région libre sur la première face principale externe (en bande de préférence), notamment apte à être alimentée électriquement (via une partie conductrice d'un meuble en position montée par contact etc) pour être reliée à une source d'alimentation électrique
Et le panneau vitré lumineux selon l'invention comprend aussi:
- une deuxième zone électroconductrice (sans câble) isolée électriquement de la première zone électroconductrice, sur la première (de préférence) ou sur la deuxième face principale et éventuellement dépassant sur la tranche de couplage, notamment comportant un deuxième film électroconducteur autoportant fixé (par collage etc) à la première face principale externe et éventuellement dépassant et fixé sur la tranche de couplage ou un deuxième revêtement électroconducteur sur la première face principale externe et éventuellement dépassant sur la tranche de couplage, deuxième zone électroconductrice de préférence en bordure périphérique de la première face principale externe comportant :
   - une deuxième région dite d'interconnexion en regard du profilé, de préférence sur la première face principale externe et en regard de la première aile, voire sur la tranche de couplage, la quatrième extrémité étant en liaison électrique avec ladite deuxième région d'interconnexion
   - prolongée par une deuxième région libre (en bande de préférence), de préférence sur la première face principale externe notamment apte à être alimentée électriquement (via une partie conductrice d'un meuble en position montée par contact etc) - pour être reliée à la source d'alimentation électrique -.

Ainsi le système de câblage lié au support de diodes est cantonné dans le profilé ce qui permet :
- ne créer pas de surlargeur par exemple pas de fils électriques, câbles courant le long des première et/ou deuxième tranches jusqu'à l'alimentation électrique (en fond de meuble etc)
- de protéger le câblage
- de manipuler aisément le produit sans risque d'abimer
- une meilleure esthétique.

Par ailleurs, les premier et deuxième zones libres sont alimentables (électriquement) à tout moment par exemple, le panneau s'illumine dès que le panneau est posé (glissé) sur des éléments conducteurs électriques d'un meuble ou d'un panneau mural en liaison avec l'alimentation électrique déportée, par exemple alimentation électrique derrière le fond de meuble ou en proximité du fond de meuble.

Avantageusement, la première région dite d'interconnexion est (une bande) sur la première face principale externe (de préférence horizontale et inférieure), la deuxième extrémité est entre la première aile et la première région d'interconnexion sur la première face principale. Et de préférence la deuxième région dite d'interconnexion est (une bande) sur la première face principale externe (de préférence horizontale et inférieure) et la quatrième extrémité est entre la première aile et la deuxième région d'interconnexion sur la première face principale.

Une région d'interconnexion sur la première face principale est plus simple à réaliser que sur la tranche de couplage.
La deuxième extrémité peut être plaquée ou fixée (collée avec colle conductrice, soudée...) à la première région d'interconnexion et de préférence la quatrième extrémité est plaquée ou fixée (collé avec colle conductrice ou soudée..) à la deuxième région d'interconnexion.

Dans un mode de réalisation préféré :
- la tranche de couplage est la tranche longitudinale,
- la première région dite d'interconnexion est (une bande) sur la première face principale externe s'étend entre la tranche de couplage et la tranche longitudinale opposée, notamment une (première) bande rectangulaire
- et de préférence la deuxième région dite d'interconnexion est (une bande) sur la première face principale externe et s'étend entre la tranche de couplage et la tranche longitudinale opposée, notamment une (deuxième) bande rectangulaire.

De préférence, la première région libre et même la première région dite d'interconnexion est (une bande) le long d'une première bordure de la première tranche, donc une bande périphérique, et de préférence, la deuxième région libre et même la deuxième région dite d'interconnexion est (une bande) périphérique, le long de la première bordure ou d'une (deuxième) bordure de la deuxième tranche. Alternativement, si nécessaire, la deuxième région dite d'interconnexion est une bande plus vers le centre du vitrage par exemple parallèle à la bande formant la première région dite d'interconnexion périphérique.
Par exemple la première région libre périphérique est espacée d'au plus 10cm ou d'au plus 5 ou 1cm de la première tranche.

La première zone électroconductrice présente de préférence une conductivité électrique d'au moins 10⁵ (Ω·m)⁻¹ et de préférence la deuxième zone électroconductrice présente une conductivité électrique d'au moins 10⁵ (Ω·m)⁻¹.

On peut prévoir l'une au moins ou les caractéristiques suivantes :
- la première région libre (et même la première zone électroconductrice) est une bande de largeur W1 d'au plus 50 mm et d'au moins 5mm, et de préférence la tranche de couplage est la tranche longitudinale.
- la première région libre (et même la première zone électroconductrice) est une bande s'étendant vers la tranche opposée de la tranche longitudinale de longueur égale à au moins la moitié ou au moins ¾ de la largeur du vitrage et par exemple à moins de 5mm de la tranche opposée à la tranche de couplage et même dépassant sur la tranche opposée
- la première région libre (et même la première zone électroconductrice) est une bande d'épaisseur d'au plus 1mm et même d'au plus 300µm (notamment pour le film) ou d'au plus 50µm (notamment pour le revêtement) et même d'au plus 20µm (notamment pour le revêtement).
et de préférence :
- la deuxième région libre (et même la deuxième zone électroconductrice) est une bande de largeur W2 d'au plus 50 mm et d'au moins 5mm.
- la deuxième région libre (et même la deuxième zone électroconductrice) est une bande s'étendant vers la tranche opposée de la tranche longitudinale de longueur égale à au moins la moitié ou au moins ¾ de la largeur du vitrage et par exemple à moins de 5mm de la tranche opposée à la tranche de couplage et même dépassant sur la tranche opposée.
- la deuxième région libre (et même la deuxième zone électroconductrice) est une bande d'épaisseur d'au plus 1mm et même d'au plus 300µm (notamment pour le film) ou d'au plus 50µm (pour le revêtement) et même d'au plus 20µm (pour le revêtement).

En outre, la première zone électroconductrice (et même la deuxième zone électroconductrice) est en matériau métallique (argent , cuivre etc) ou même de graphite ou de polymère conducteur. Il peut comprendre une matrice chargée de (nano)particules électroconductrices -en particulier nanofils- de préférence métalliques (argent, cuivre etc) ou de graphite.

La première zone électroconductrice (et même la deuxième zone électroconductrice) peut être une bande transparente, sous forme de grille en matériau métallique (argent, cuivre etc) ou bande pleine en matériau transparent par exemple une matrice chargée de (nano)particules électroconductrices - en particulier (nano)fils - de préférence métalliques (argent, cuivre etc) ou de graphite.

Le premier (et/ou deuxième) film électroconducteur peut être un film plastique transparent notamment d'épaisseur d'au plus 0,4µm par exemple en polyester, en PET (poly(téréphtalate d'éthylène)) revêtu d'une couche électroconductrice par exemple métallique (cuivre argent) par exemple d'au plus 1µm ou même d'au plus 100nm ou d'au plus 50nm. C'est une couche pleine (opaque) ou en grille (lignes fines par exemple de largeur d'au plus 10µm ou même d'au plus 5 ou 2µm) pour une transparence globale.
Ce peut être aussi un film métallique (cuivre, aluminium argent etc).
Le premier (et/ou deuxième) film électroconducteur peut être collé à la première face principale externe voire aussi à la tranche de couplage (notamment longitudinale) et/ou à la tranche opposée à la tranche de couplage.

On peut choisir un premier (et/ou deuxième) revêtement notamment métallique plutôt qu'un film électroconducteur notamment à l'aide d'une masque (pour faire une grille etc).
Il peut être déposé :
- par dépôt physique en phase vapeur,
- ou dépôt chimique en phase vapeur notamment à pression atmosphérique
- par voie liquide par exemple par pulvérisation (avec masquage) ou encore par impression ou par sérigraphie ce qui permet de réaliser facilement un dépôt sélectif.

Le premier et/ou deuxième revêtement électroconducteur peut comprendre ou être constitué d'une couche essentiellement polymérique (déposée par voie liquide). Par exemple, il s'agit d'une couche d'un ou des polymères conducteurs de l'une au moins des familles suivantes, notamment transparent :
- la famille des polythiophènes, comme le PEDOT (3,4-polyéthylenedioxythiopène), le PEDOT/PSS c'est-à-dire le (3,4-polyéthylènedioxythiopène mélangé avec polystyrènesulfonate, et autres dérivés décrits dans la demande US2004253439,
- ou encore les poly(acétylène)s, poly(pyrrole)s, poly(aniline)s, poly(fluorène)s, poly(3-alkyl thiophène)s, polytétrathiafulvalènes, polynaphthalènes, poly(p-phénylène sulfide), et poly(para-phénylène vinylène)s.
Comme polythiophènes, on peut choisir par exemple le produit commercialisé par la société HC Strack sous le nom de BAYTPON® ou encore par la société Agfa sous le nom d'Orgacon®, ou d'Orgacon EL-P3040®.

Dans un cas, ledit premier revêtement peut être directement sur la première face principale externe et de préférence ledit deuxième revêtement est directement sur la première face principale externe.

Dans un autre cas, ledit premier revêtement peut être sur un premier revêtement fonctionnel sur la première face principale externe et de préférence ledit deuxième revêtement est sur la première face principale externe sur un deuxième revêtement fonctionnel.

En particulier, la première face est revêtue d'une couche miroir à base d'argent surmonté d'une couche de protection diélectrique, ledit premier revêtement électroconducteur est sur la couche de protection diélectrique et de préférence, ledit deuxième revêtement électroconducteur est sur la couche de protection.

De préférence, dans ce cas, on privilégie pour le premier et/ou deuxième revêtement un dépôt par voie liquide (impression sérigraphie ..) et suivi d'un traitement thermique de préférence d'au plus 150°C ou sans traitement thermique afin de ne pas endommager la couche de protection.
Par exemple on choisit une peinture métallique, une couche (encre etc) à base de nanofils métalliques (argent) par exemple en base solvantée. On peut citer le produit PROTAVIC VCO 20260 de la société PROTAVIC ou encore on choisit un polymère conducteur voire un oxyde transparent conducteur.
Le premier et/ou deuxième revêtement peut être une monocouche ou une multicouche.

Le miroir est par exemple le produit SGG Miralite de la société SAINT-GOBAIN GLASS, avec une peinture de protection à l'oxydation. En variante, le miroir est à base de chrome tel que le produit SGG Mirastar de la société SAINT-GOBAIN GLASS.

La première zone électroconductrice peut comporter un premier revêtement électroconducteur sur la première face principale externe, ledit premier revêtement électroconducteur est transparent et de préférence la deuxième zone électroconductrice comporte un deuxième revêtement électroconducteur sur la première face principale externe, ledit deuxième revêtement électroconducteur est transparent.

Par ailleurs lorsque la première feuille de verre est en verre minérale (silico(sodo)calcique, clair extraclair etc) est déjà trempé on évite tout traitement thermique ou au moins d'au plus 150°C.
Lorsque la première feuille de verre est en verre minérale on peut former une couche d'émail conducteur chargé en argent (formant le premier et/ou deuxième revêtement) par le traitement thermique à au moins 600°C et même de 640 à 710°C suivi d'une opération de trempe.

Concernant le cablage, la première extrémité peut être liée (fixée etc) au profilé métallique et le profilé choisi métallique être en liaison électrique avec la première partie du circuit par tout autre moyen. Dans ce cas on préfère que la troisième extrémité soit isolée du profilé choisi métallique
Dans une réalisation préférée :
- la première extrémité est fixée (collée, soudée etc) directement sur la première partie du circuit ou par une première pièce intermédiaire (connecteur, en bande etc) de préférence isolée électriquement du profilé métallique.
- et même la deuxième extrémité est fixée (collée, soudée etc) directement sur la deuxième partie du circuit ou par une pièce intermédiaire (connecteur, en bande etc) qui est la première pièce ou une deuxième pièce (similaire de préférence isolée électriquement du profilé métallique.
On préfère éviter ainsi tout chemin de diffusion de l'eau vers la tranche de couplage, en particulier faciliter le nettoyage du panneau (tablette etc).

De préférence le profilé (métallique, plastique etc) comporte la deuxième aile.

Avec le profilé comporte la deuxième aile, le système de cablage électrique est masqué et mieux protégé par le profilé.
Et même le panneau selon l'invention comprend de préférence des moyens d'étanchéité à l'eau liquide du système de cablage en particulier au moins des première et troisième extrémités et mieux du support de diodes et des diodes, moyens d'étanchéité à l'eau liquide entre la base et la tranche de couplage voire entre les première et deuxième ailes et les première et deuxième faces principales externes(cordon etc), notamment une colle (fixant la base à la tranche de couplage éventuellement) ou une mousse , en particulier du silicone,

Par exemple le support de diodes est de longueur inférieure à la longueur de la base, notamment laissant deux zones d'extrémités de part et d'autre du support de diodes et les moyens d'étanchéité à l'eau liquide sont sur les deux zones d'extrémités de part et d'autre du support de diodes.
Les deuxièmes et quatrième extrémités qui sont en première face principale sont éventuellement protégées si on rajoute les moyens d'étanchéité à l'eau liquide entre les première et deuxième ailes et les première et deuxième faces principales externes par exemple un cordon de colle (de silicone).
Le support de diodes peut être fixé par sa face arrière à la base ou à des moyens de dissipation de chaleur (plaque métallique si le profilé est diélectrique, plastique) et/ou fixé par sa face avant à la tranche de couplage.

Le panneau lumineux selon l'invention peut comprendre :
- un élément isolant électrique sur la première extrémité par exemple pour protéger de la tranche de couplage ou même (si ruban mono ou double face, colle, silicone...) pour coller le support à la tranche de couplage, cela peut former des moyens d'étanchéité à l'eau liquide.
- un autre élément isolant électrique sur la troisième extrémité par exemple pour protéger de la tranche de couplage ou (si ruban mono ou double face, colle silicone) pour coller le support à la tranche de couplage, cela peut former des moyens d'étanchéité à l'eau liquide.

Dans une réalisation, le profilé est métallique, la deuxième extrémité est entre la première aile et la première région d'interconnexion sur la première face principale et un isolant électrique (revêtement isolant électrique ou film autoportant isolant électrique) est entre la première aile et la deuxième extrémité et de préférence la quatrième extrémité est entre la première aile et la deuxième région d'interconnexion sur la première face principale et un autre isolant électrique (revêtement isolant électrique ou film autoportant isolant électrique) est entre la première aile et la quatrième extrémité.

Par exemple et le premier isolant électrique (et même le deuxième) est d'épaisseur d'au plus 1mm ou d'au plus 0,5mm et même d'au plus 0,3mm. Par exemple il s'agit d'une bande adhésive mono ou double face par exemple un support polymérique transparent (polyester, PET, par exemple en mousse notamment de polyoléfine réticulée ou non etc) avec en mono ou double face de la colle acrylique (modifié par exemple) en particulier sensible à la pression comme le produit D9605 dénommé de la société NITTO, d'épaisseur 0,22 mm. Alternativement ce peut être un ruban adhésif sans support (ruban de transfert).

Le système de câblage peut comporter un autre câble électrique pour transporter des données et avec une autre zone électroconductrice selon l'invention.
L'autre zone électroconductrice est sur la première face principale externe, zone électroconductrice comportant un film électroconducteur autoportant fixé à la première face principale externe ou un revêtement électroconducteur sur la première face principale externe, et comportant
- une région dite d'interconnexion en regard du profilé (couverte, masquée, protégée par le profilé), une extrémité dudit autre câble étant en liaison électrique avec ladite région d'interconnexion
- prolongée par une région libre sur la première face principale externe.

Le panneau lumineux selon l'invention peut comporter deux séries de diodes sur le support de diodes ou chacun sur un support de diodes dédié en regard de la tranche de couplage, chaque série présentant un circuit d'alimentation électrique indépendant. On peut alors avoir :
- un autre système de câblage électrique selon l'invention, les troisième et quatrième câbles électriques ne dépassant pas du profilé
- des troisième et quatrième zones électroconductrices selon l'invention.
La troisième zone électroconductrice est sur la première face principale externe, zone électroconductrice comportant un film électroconducteur autoportant fixé à la première face principale externe ou un revêtement électroconducteur sur la première face principale externe, et comportant :
- une région dite d'interconnexion en regard du profilé (couverte, masquée, protégée par le profilé), une extrémité du troisième cable étant en liaison électrique avec ladite région d'interconnexion
- prolongée par une région libre sur la première face principale externe.
   La quatrième zone électroconductrice isolée électriquement de la troisième zone électroconductrice, sur la première face principale externe, zone électroconductrice comportant un film électroconducteur autoportant fixé à la première face principale externe ou un revêtement électroconducteur sur la première face principale externe, et comportant
- une région dite d'interconnexion en regard du profilé (couverte, masquée, protégée par le profilé), une extrémité du quatrième câble étant en liaison électrique avec la région d'interconnexion
- prolongée par une région libre sur la première face principale externe.

Dans une réalisation, les première et deuxième tranches (adjacentes à la tranche de couplage) sont apparentes notamment le profilé est uniquement le long de la tranche de couplage (longitudinale) /absent des première et deuxième tranches (latérales).

Le vitrage peut être monolithique et comporte uniquement ladite première feuille de verre minéral trempé.
Avantageusement, la première feuille de verre est à base d'un verre ayant une forte transmission lumineuse, d'au moins 85%, lorsque la mesure est effectuée sous illuminant D65 sur une feuille de verre à faces parallèles de 4 mm d'épaisseur. De préférence, il s'agira d'un verre dit extraclair, tel que le verre DIAMANT® ou le verre DIAMANT® solaire commercialisé par la société SAINT-GOBAIN GLASS.
Le verre du panneau vitré peut être trempé notamment après dépôt d'une formulation pour émail (fritte de verre, etc...) pour présenter une meilleure résistance mécanique.

Dans une autre variante de réalisation, le panneau vitré lumineux constitue un vitrage feuilleté comprenant la première feuille de verre, une deuxième feuille de verre et une feuille intermédiaire en matériau plastique (transparent), les diodes étant par exemple centrées sur la tranche du vitrage feuilleté ou en regard de la tranche de la première feuille voire de la deuxième feuille.

Le panneau vitré lumineux en verre feuilleté est nécessaire dans certaines applications pour répondre à des besoins en sécurité.

La matière plastique de la feuille intermédiaire est du type connu, par exemple le polyuréthane (PU) souple, un thermoplastique sans plastifiant tel que le copolymère éthylène/acétate de vinyle (EVA), le polyvinyle de butyral (PVB), un copolymère de polyéthylène et d'acrylate par exemple vendu par la société DuPont sous le nom de Butacite® ou vendu par la société Solutia. La feuille en matière plastique a par exemple une épaisseur entre 0,2 mm et 1,1 mm, notamment 0,38 et 0,76 mm. D'autres matières plastiques peuvent être utilisées telles que des polyoléfines comme du polyéthylène (PE), polypropylène (PP) du PEN ou du PVC ou des résines ionomères.

Le panneau vitré lumineux selon l'invention peut comprendre des moyens de diffusion assurant l'extraction de la lumière guidée dans le vitrage qui sont agencés sur la première face principale externe, espacées des première et deuxième zones électroconductrices.

Le panneau vitré lumineux selon l'invention peut comprendre des moyens de diffusion assurant l'extraction de la lumière guidée dans le vitrage sont agencés sur la deuxième face principale ou au sein du vitrage, espacées et/ou en vis-à-vis des première et deuxième zones électroconductrices.
La zone lumineuse peut couvrir une partie de la surface du vitrage, laisser ainsi au moins une première zone sombre, c'est-à-dire non lumineuse, zone sombre qui est choisie parmi une zone transparente (clair de vitre...) ou une zone décorative par un revêtement opaque et/ou coloré, notamment ou encore une zone réfléchissante notamment miroir par exemple formée par une argenture couverte par une peinture de protection à l'oxydation,

Le panneau vitré lumineux de l'invention est utilisé de préférence à l'horizontal avec la première face principale qui est une face inférieure (coté sol). A titre d'exemples, le vitrage est destiné à :
- un vitrage d'ameublement intérieur, comme une paroi lumineuse de salle de bains, un miroir éclairant, une partie vitrée lumineuse d'un meuble,
- une étagère vitrée, d'équipement réfrigéré domestique ou professionnel.
Le panneau lumineux selon l'invention peut former une tablette, une étagère, une tablette de réfrigérateur. La tranche de couplage est de préférence la tranche de façade (avant).

Le panneau lumineux selon l'invention peut alternativement être à la verticale, de préférence avec la première face principale qui est une face coté mur ou dans le cas d'une cloison coté arrière. A titre d'exemples, le vitrage est destiné à :
- former un miroir éclairant (sans profilé obligatoirement en cadre)
- un crédence.
- une cloison
La tranche de couplage peut être alors n'importe quelle tranche.

L'invention concerne en outre une paroi de meuble notamment réfrigéré ou murale apte à intégrer le panneau vitré lumineux tel que décrit précédemment.

Avantageusement, la tranche de couplage, de préférence longitudinale, est la tranche de façade et la paroi comporte un premier moyen conducteur en contact électrique avec la première région libre (et relié à la source d'alimentation électrique externe au meuble) et même un autre moyen conducteur en contact électrique avec la première région libre (et relié à la source d'alimentation électrique externe au meuble).

Le premier moyen conducteur peut être un premier ergot, de préférence de maintien du panneau, métallique ou métallisé, saillant de la face intérieure de la paroi, et de préférence un autre moyen conducteur métallique ou métallisé qui est un autre ergot de préférence de maintien du panneau et isolé électriquement du premier ergot, saillant de la face intérieure de la paroi.

Le premier moyen conducteur peut être alternativement, dans une première rainure de la paroi et de préférence l'autre moyen conducteur est aussi dans la première rainure de la paroi.
Par exemple il s'agit de deux rubans conducteurs espacés entre eux ou de deux revêtements.

La paroi peut être en tout matériau (opaque) : bois (massif ou non), plastique, acier.

L'invention concerne aussi un meuble comportant des première et deuxième parois latérales et un fond de meuble, la première paroi ou le fond de meuble étant la paroi décrite précédemment.

La présente invention est maintenant décrite à l'aide d'exemples uniquement illustratifs et nullement limitatifs de la portée de l'invention, et à partir des illustrations ci-jointes, dans lesquelles :

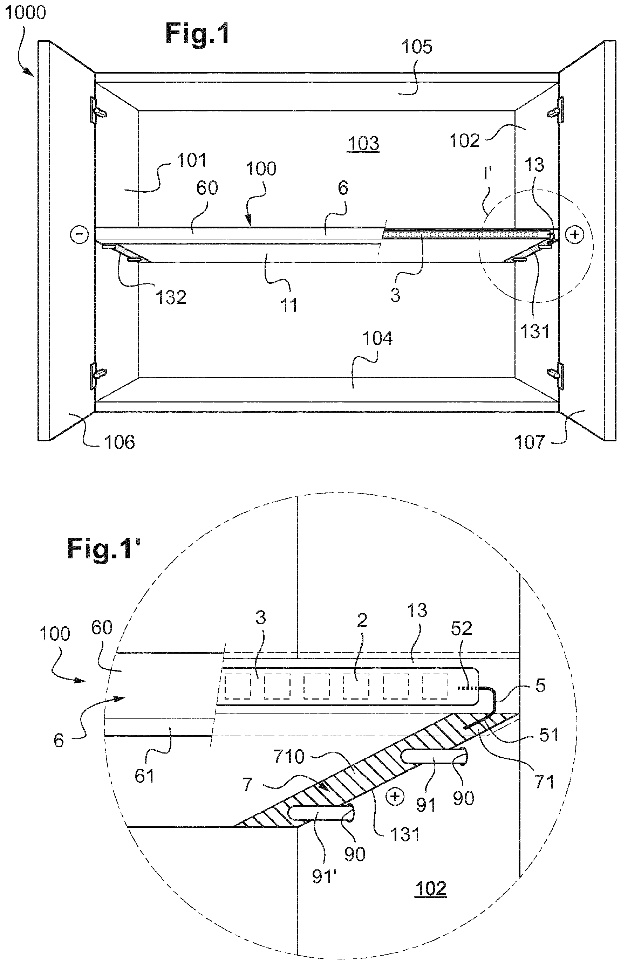

La figure 1 représente une vue schématique de façade d'un meuble intégrant un panneau vitré lumineux de l'invention qui est ici une étagère, dans un premier mode de réalisation.
La figure 1' représente une vue schématique de détail du panneau vitré de l'invention de la figure 1.
La figure 2 représente une vue schématique en coupe du panneau vitré de l'invention de la figure 1.
La figure 3 représente une vue schématique côté face arrière du panneau vitré de l'invention de la figure 1.
La figure 4 représente une vue schématique en coupe du panneau vitré de l'invention dans un deuxième mode de réalisation.
La figure 5 représente une vue schématique côté face arrière du panneau vitré de l'invention de la figure 4.
La figure 6 représente une vue schématique de façade d'un meuble intégrant un panneau vitré lumineux de l'invention qui est ici une étagère, dans un autre mode d'intégration.
La figure 7 représente une vue schématique côté face arrière du panneau vitré de l'invention dans un troisième mode de réalisation.
La figure 8 représente une vue schématique côté face arrière du panneau vitré de l'invention dans un quatrième mode de réalisation.
La figure 9 représente une vue schématique en perspective d'un meuble intégrant un panneau vitré lumineux de l'invention qui est ici une étagère, dans un autre mode d'intégration.

Les figures ne sont pas à l'échelle.

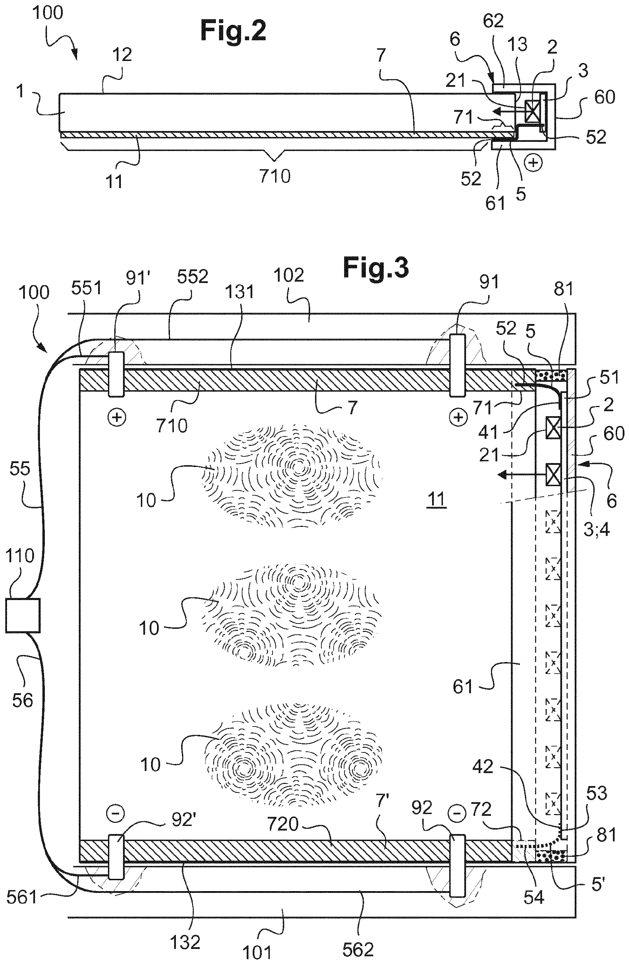

La figure 1 représente une vue schématique de façade d'un meuble intégrant un panneau vitré lumineux de l'invention qui est ici une étagère, dans un premier mode de réalisation. La figure 1' représente une vue schématique de détail du panneau vitré de l'invention de la figure 1.La figure 2 représente une vue schématique en coupe du panneau vitré de l'invention de la figure 1.La figure 3 représente une vue schématique côté face arrière du panneau vitré de l'invention de la figure 1.

Le meuble 1000 comporte deux parois latérales ou flancs 101, 102, un fond 103 et accessoirement une paroi ou base inférieure 104, une paroi supérieure 105, des portes 106, 107.
Le meuble comporte un panneau vitré lumineux 100 qui forme une étagère. Chaque paroi latérale comporte, un ou même plusieurs moyens conducteurs, ici deux ergots métalliques ou métallisés espacés, saillant de la face intérieure de la paroi servant en outre au maintien du panneau.

Le panneau vitré lumineux 100 forme une étagère lumineuse à l'horizontal, pane, et comporte:
- un vitrage monolithique plan comportant une seule première feuille de verre 1 rectangulaire avec des première et deuxième faces principales externes opposées 11, 12, une tranche 13, dite tranche de couplage qui est la tranche longitudinale et de façade, et des première et deuxième tranches 131,132 de part et d'autre de la tranche de couplage (en regard des parois 101, 102)
- des diodes électroluminescentes 2 avec des faces émettrices 21 de la lumière couplées optiquement à la tranche de couplage 13, les diodes étant sur un support 3 dit support de diodes, porteur d'un circuit 4 d'alimentation électrique des diodes, les diodes électroluminescentes étant alimentées à une tension d'au plus 50V en continu,
- un profilé 6 maintenu sur le vitrage 1 par la tranche et/ou l'une ou les faces principales externes, profilé comportant :
- une base allongée 60, en regard et le long de la tranche de couplage 13, le support de diodes et les diodes électroluminescentes étant entre la base et la tranche de couplage
- une première aile 61 en regard et sur la première face principale externe 11,
- et de préférence une deuxième aile 62 en regard et sur la deuxième face principale externe 12.

Les diodes 2 sont disposées selon l'invention de façon à injecter leur lumière en direction de la tranche du verre selon la flèche illustrée sur la figure 1.
Le profilé 6 présente une section transversale en U tourné vers le vitrage. La solidarisation du profilé 6 est réalisée de manière connue. Ici, le U de chaque profilé chevauche la feuille de verre.
Les dimensions (longueur et largeur) du vitrage éclairant sont adaptées à l'utilisation qui en est faite, et le nombre de diodes est alors fonction de ces dimensions.

Chaque diode 2 en regard de la tranche de couplage est de préférence à proximité immédiate, telle qu'une distance de séparation de 1 mm au plus.

Il est prévu un système de câblage électrique d'alimentation des diodes comprenant :
- un premier câble électrique 5 par exemple fil (gainé) de diamètre d'au plus 5mm avec une première polarité (ici +), comportant une première extrémité 51 (sans gaine, apte à être en contact électrique) et une deuxième extrémité 52 opposée sans gaine, apte à être en contact électrique), la première extrémité 51 étant en liaison électrique avec une première partie 41 du circuit d'alimentation électrique,
- un deuxième câble électrique 5' par exemple fil (gainé) de diamètre d'au plus 5mm avec une deuxième polarité distincte de la première polarité, comportant une extrémité 53 dite troisième extrémité (sans gaine, apte à être en contact électrique) et une extrémité opposée 54 dite quatrième extrémité sans gaine, apte à être en contact électrique), la troisième extrémité étant en liaison électrique avec une deuxième partie 42 du circuit distincte et isolée de la première partie 41.
Les premier et deuxième câbles électriques 5, 5' ne dépassent pas du profilé 6. Le profilé 6 protège et de préférence masque le câblage, il est par exemple métallique ou en plastique (coloré etc).

La première extrémité est fixée directement sur la première partie du circuit ou par une première pièce intermédiaire et la troisième extrémité est fixée directement sur la deuxième partie du circuit ou par une pièce intermédiaire qui est la première pièce ou une deuxième pièce.

Le panneau comprend en outre des moyens d'étanchéité à l'eau liquide 81, 81' du système de cablage, entre la base et la tranche de couplage, notamment une colle ou une mousse, en particulier du silicone.
En variante, il comprend un élément isolant électrique entre la tranche de couplage et la première extrémité et de préférence un autre élément isolant électrique entre la tranche de couplage et la troisième extrémité.

Pour la continuité de l'alimentation électrique, le panneau vitré comprend :
- une première zone électroconductrice 7 sur la première face principale externe, notamment première zone électroconductrice comportant un premier film électroconducteur autoportant fixé à la première face principale externe ou un premier revêtement électroconducteur sur la première face principale externe, et première zone électroconductrice comportant :
- une première région dite d'interconnexion 71 en regard du profilé, la deuxième extrémité 52 étant en liaison électrique avec ladite première région d'interconnexion
- prolongée par une première région libre sur la première face principale externe 710. Le panneau vitré comprend :
- une deuxième zone électroconductrice 7' isolée électriquement de la première zone électroconductrice, de préférence sur la première face principale externe, notamment deuxième zone électroconductrice comportant un deuxième film électroconducteur autoportant fixé à la première face principale externe ou un deuxième revêtement électroconducteur sur la première face principale externe, et deuxième zone électroconductrice comportant :
- une deuxième région dite d'interconnexion 72 en regard du profilé, la quatrième extrémité étant en liaison électrique avec ladite deuxième région d'interconnexion
- prolongée par une deuxième région libre 720 sur la première face principale externe 11.

La première région dite d'interconnexion 72 est sur la première face principale externe 11, la deuxième extrémité est entre la première aile 61 et la première région d'interconnexion sur la première face principale externe.
La deuxième région dite d'interconnexion est sur la première face principale externe, la quatrième extrémité est entre la première aile et la deuxième région d'interconnexion sur la première face principale externe.
Lorsque le profilé est métallique, un isolant électrique peut être ajouté entre la première aile et la deuxième extrémité et un autre isolant électrique entre la première aile et la quatrième extrémité. Par exemple un ruban adhésif mono ou double face ou une colle ou une peinture etc.

La première zone électroconductrice 7 est une bande qui s'étend entre la tranche de couplage et la tranche longitudinale opposée le long d'une première bordure de la première tranche et la deuxième zone électroconductrice 7' est une bande qui s'étend entre la tranche de couplage et la tranche longitudinale opposée.
La première région libre 710 est une bande le long de la première bordure de la première tranche latérale 131 et la deuxième région libre 720 est une bande le long d'une bordure de la deuxième tranche de la première bordure ou en variante le long de la première bordure.

Par exemple la première région libre est espacée d'au plus 10cm de la première tranche Par exemple la deuxième région libre est espacée d'au plus 10cm de la deuxième tranche.
On préfère des bandes 7,7' d'au plus 5cm par exemple 1 cm.

La première zone électroconductrice 7 présente une conductivité électrique d'au moins 10⁵ (Ω·m)⁻¹ tout comme la deuxième zone électroconductrice présente une conductivité électrique d'au moins 10⁵ (Ω·m)⁻¹. On ajuste la largeur et/ou l'épaisseur en conséquance.

La première zone électroconductrice (comme la deuxième) est par exemple un premier revêtement électroconducteur (comme le deuxième) sur la première face principale externe, ledit premier revêtement électroconducteur est
- métallique, par exemple en cuivre
- ou à base de (nano)particules métalliques, tels que des nanofils à l'argent,
- ou encore à base de graphite
- en polymère conducteur
- un émail conducteur (à l'argent par exemple).

Le premier revêtement électroconducteur (comme le deuxième) peut être déposé par voie liquide en particulier par sérigraphie, pulvérisation ou impression.

Dans le cas d'un émail, la trempe suit la cuisson par exemple d'au moins 600°C.

Le premier revêtement électroconducteur comme le deuxième peut être transparent
La société Protavic (produit dénommé PROTAVIC VCO 20260) propose une encre conductrice transparente qui comporte des nano-fils d'argent en base solvantée. Avec un dépôt de moins d'1µm après séchage à 130°C pendant 30min la conductivité électrique est 5,8 10⁷(Ω.m)⁻¹.

Concernant les moyens d'extraction de la lumière on choisit par exemple trois zones en rond 10 porteuses d'une couche diffusante sur la face 11 ou 12.

Dès l'entrée en contact avec les ergots métalliques saillants 91, 92 (et/ou 91' et 92') sur les deux flancs 101, 102 du meuble 1000, la tablette 100 s'illumine.

Les ergots 91 à 92' sont eux liés à l'alimentation électrique 110 par des fils 55,56, 551, 552, 561, 562 par exemple insérés dans des trous dans les flancs 101,102.

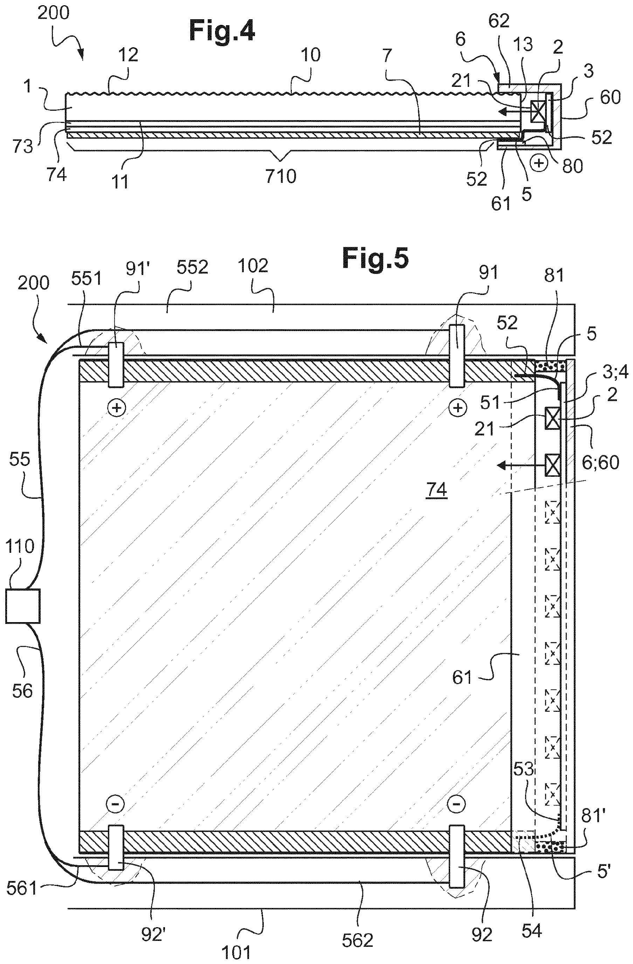

La figure 4 représente une vue schématique en coupe du panneau vitré de l'invention 200 dans un deuxième mode de réalisation. La figure 5 représente une vue schématique côté face arrière du panneau vitré lumineux 200 de l'invention de la figure 4.
Le panneau vitré 200 diffère du premier panneau 100 en ce que :
- le premier revêtement électroconducteur est sur la première face principale externe 11 déjà revêtue d'une couche miroir à base d'argent 72 surmontée d'une couche de protection diélectrique 73, ledit premier revêtement électroconducteur est donc sur la couche de protection
- et le deuxième revêtement électroconducteur sur la première face principale externe, ledit deuxième revêtement électroconducteur est sur la couche de protection diélectrique.
Concernant les moyens d'extraction de la lumière 10 on choisit de texturer entièrement la face externe principale 12.

Par ailleurs le profilé 6 est métallique, un isolant électrique 80 est entre la première aile et la deuxième extrémité et un autre isolant électrique est entre la première aile et la quatrième extrémité.

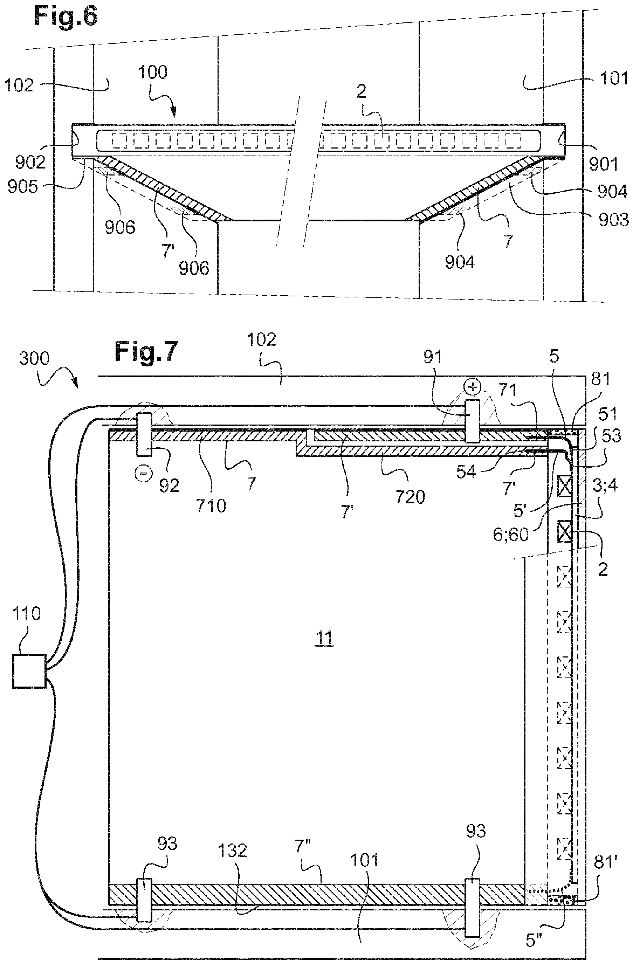

La figure 6 représente une vue schématique de façade d'un meuble intégrant un panneau vitré lumineux 100 qui est ici une étagère, dans un autre mode d'intégration. Chaque paroi latérale 101, 102 comporte comme moyen conducteur électrique apte à être en contact électrique avec la région libre en jeu, une ou des zones (patch) électroconductrices 903 à 904, par exemple une couche métallique, qui est dans une rainure 901,902 de la paroi, sur la partie inférieure 903, 904.

La figure 7 représente une vue schématique côté face arrière du panneau vitré lumineux selon l'invention 300 dans un troisième mode de réalisation.

Le panneau 300 diffère d'abord du premier panneau 100 en ce que la deuxième zone électroconductrice 7' est le long de la première bordure, espacée de la première zone électroconductrice 7.
Ici les ergots 91 et 92 liées à la paroi 102 font contact avec + et -.

Le système de câblage comporte aussi un autre câble électrique pour transporter des données et avec une autre zone électroconductrice selon l'invention.
L'autre zone électroconductrice est sur la première face principale externe, zone électroconductrice comportant au moins un revêtement électroconducteur 7" sur la première face principale externe, et comportant :
- une région dite d'interconnexion en regard du profilé, une extrémité dudit autre cable étant en liaison électrique avec ladite région d'interconnexion
- prolongée par une région libre sur la première face principale externe.

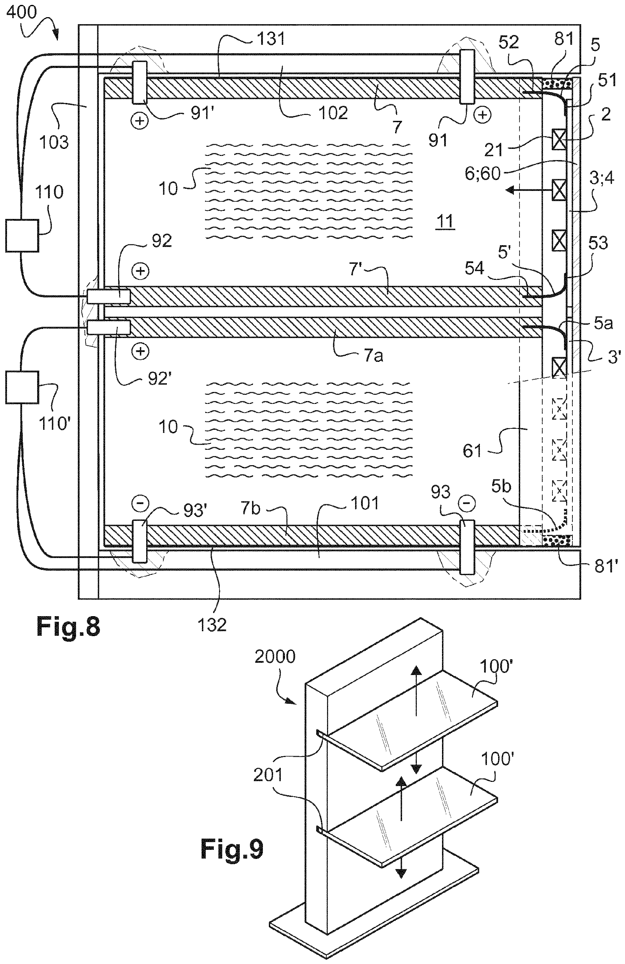

La figure 8 représente une vue schématique côté face arrière du panneau vitré lumineux de l'invention dans un quatrième mode de réalisation.
Le panneau 400 diffère d'abord du premier panneau en ce qu'il comporte deux séries de diodes sur le support de diodes ou comme ici chacun sur un support de diodes 3, 3' dédié en regard de la tranche de couplage, chaque série présentant un circuit d'alimentation électrique indépendant.

Pour la première série de diodes, la deuxième zone électroconductrice 7' est ramenée vers le centre du vitrage (parallèle à la zone électroconductrice 7).

On peut alors avoir pour la deuxième série de diodes :
- un autre système de câblage électrique selon l'invention, les troisième et quatrième câbles électriques 5a, 5b ne dépassant pas du profilé
- des troisième et quatrième zones électroconductrices selon l'invention 7a, 7b.
La troisième zone électroconductrice 7a comportant un revêtement électroconducteur sur la première face principale externe, et comportant :
- une région dite d'interconnexion en regard du profilé (couverte, masquée, protégée par le profilé), une extrémité du troisième câble étant en liaison électrique avec ladite région d'interconnexion
- prolongée par une région libre sur la première face principale externe.
   La quatrième zone électroconductrice 7b isolée électriquement de la troisième zone électroconductrice, sur la première face principale externe, est un revêtement électroconducteur sur la première face principale externe, et comportant :
- une région dite d'interconnexion en regard du profilé (couverte, masquée, protégée par le profilé), une extrémité du quatrième câble étant en liaison électrique avec ladite région d'interconnexion
- prolongée par une dernière région libre sur la première face principale externe.

La dernière région libre 7a est également vers le centre.
La deuxième zone électroconductrice 7' et la dernière région libre 7a sont en contact électrique avec un élément conducteur distinct 92, 92' lié au fond du meuble 103.

La figure 9 représente une vue schématique en perspective d'un meuble 2000 intégrant un panneau vitré lumineux de l'invention 100' qui est ici une étagère, dans un autre mode d'intégration.
Dans ce cas le panneau vitré lumineux selon l'invention 100' est une étagère de type mural différent ou non du panneau 100 de la figure 1 est en en contact électrique avec des éléments conducteurs distincts liés à une rainure 201 au fond du meuble 2000.

## Revendications

1. Panneau vitré lumineux (100 à 400) comportant :
- un vitrage comportant au moins une première feuille de verre (1), le vitrage présentant des première et deuxième faces principales externes opposées (11, 12), une tranche (13), dite tranche de couplage, et des première et deuxième tranches (131,132) de part et d'autre de la tranche de couplage
- des diodes électroluminescentes (2) avec des faces émettrices (21) de la lumière couplées optiquement à la tranche de couplage (13), les diodes étant sur un support (3) dit support de diodes, porteur d'un circuit (4) d'alimentation électrique des diodes, notamment les diodes électroluminescentes étant alimentées à une tension d'au plus 50V en continu,
- un système de câblage électrique d'alimentation des diodes comprenant :
- un premier câble électrique (5) avec une première polarité, comportant une première extrémité (51) et une deuxième extrémité (52) opposée, notamment la première extrémité (51) étant en liaison électrique avec une première partie (41) du circuit d'alimentation électrique,
- un deuxième câble électrique (5') avec une deuxième polarité distincte de la première polarité, comportant une extrémité (53) dite troisième extrémité et une extrémité opposée (54) dite quatrième extrémité, notamment la troisième extrémité étant en liaison électrique avec une deuxième partie (42) du circuit distincte et isolée de la première partie (41),
- un profilé (6) maintenu sur le vitrage par la tranche et/ou l'une ou les faces principales externes, profilé comportant :
- une base allongée (60), en regard et le long de la tranche de couplage (13), le support de diodes et les diodes électroluminescentes étant entre la base et la tranche de couplage
- une première aile (61) en regard et sur la première face principale externe (11),
- et de préférence une deuxième aile (62) en regard et sur la deuxième face principale externe (12),
**caractérisé en ce que** les premier et deuxième câbles électriques (5, 5') ne dépassent pas du profilé,
et **en ce que** le panneau vitré comprend :
- une première zone électroconductrice (7) sur la première face principale externe, notamment première zone électroconductrice comportant un premier film électroconducteur autoportant fixé à la première face principale externe ou un premier revêtement électroconducteur sur la première face principale externe, et première zone électroconductrice comportant :
- une première région dite d'interconnexion (71) en regard du profilé, la deuxième extrémité (52) étant en liaison électrique avec ladite première région d'interconnexion
- prolongée par une première région libre sur la première face principale externe (710)
**en ce que** le panneau vitré comprend :
- une deuxième zone électroconductrice (7') isolée électriquement de la première zone électroconductrice, sur la première ou deuxième face principale externe, de préférence sur la première face principale externe, notamment deuxième zone électroconductrice comportant un deuxième film électroconducteur autoportant fixé à la première face principale externe ou un deuxième revêtement électroconducteur sur la première face principale externe, et deuxième zone électroconductrice comportant :
- une deuxième région dite d'interconnexion (72) en regard du profilé, la quatrième extrémité étant en liaison électrique avec ladite deuxième région d'interconnexion
- prolongée par une deuxième région libre (720) de préférence sur la première face principale externe.

2. Panneau vitré lumineux selon la revendication 1 **caractérisé en ce que** la première région dite d'interconnexion est sur la première face principale externe, la deuxième extrémité est entre la première aile et la première région d'interconnexion sur la première face principale externe et de préférence la deuxième région dite d'interconnexion est sur la première face principale externe, la quatrième extrémité est entre la première aile et la deuxième région d'interconnexion sur la première face principale externe.

3. Panneau vitré lumineux selon l'une quelconque des revendications précédentes **caractérisé en ce que** la tranche de couplage est la tranche longitudinale (13), la première région dite d'interconnexion est sur la première face principale externe est une bande qui s'étend entre la tranche de couplage et la tranche longitudinale opposée et de préférence la deuxième région dite d'interconnexion est sur la première face principale externe et est une bande qui s'étend entre la tranche de couplage et la tranche longitudinale opposée.

4. Panneau vitré lumineux selon l'une quelconque des revendications précédentes **caractérisé en ce que** la première région libre et même la première région dite d'interconnexion est une bande le long d'une première bordure de la première tranche et de préférence la deuxième région libre et même la deuxième région dite d'interconnexion est une bande le long de la première bordure ou d'une bordure de la deuxième tranche dite deuxième bordure.

5. Panneau vitré lumineux selon l'une quelconque des revendications précédentes **caractérisé en ce que** la première zone électroconductrice présente une conductivité électrique d'au moins 10⁵ (Ω·m)⁻¹ et de préférence la deuxième zone électroconductrice présente une conductivité électrique d'au moins 10⁵ (Ω·m)⁻¹.

6. Panneau vitré lumineux selon l'une quelconque des revendications précédentes **caractérisé en ce que** la première zone électroconductrice comportant un premier revêtement électroconducteur sur la première face principale externe, ledit premier revêtement électroconducteur est métallique, notamment à base de (nano)particules métalliques, tels que des nanofils, à base de graphite et de préférence la deuxième zone électroconductrice comportant un deuxième revêtement électroconducteur sur la première face principale externe, ledit deuxième revêtement électroconducteur est métallique, notamment à base de (nano)particules métalliques, tels que des nanofils, à base de graphite.

7. Panneau vitré lumineux selon l'une quelconque des revendications précédentes **caractérisé en ce que** la première zone électroconductrice comportant un premier revêtement électroconducteur sur la première face principale externe, ledit premier revêtement électroconducteur est transparent et de préférence la deuxième zone électroconductrice comportant un deuxième revêtement électroconducteur sur la première face principale externe, ledit deuxième revêtement électroconducteur est transparent.

8. Panneau vitré lumineux selon l'une quelconque des revendications précédentes **caractérisé en ce que** la première zone électroconductrice comportant un premier revêtement électroconducteur sur la première face principale externe, la première face principale externe est revêtue d'une couche miroir à base d'argent surmontée d'une couche de protection diélectrique, ledit premier revêtement électroconducteur est sur la couche de protection et de préférence la deuxième zone électroconductrice comportant un deuxième revêtement électroconducteur sur la première face principale externe,, ledit deuxième revêtement électroconducteur est sur la couche de protection diélectrique.

9. Panneau vitré lumineux selon l'une quelconque des revendications précédentes **caractérisé en ce que** la première extrémité est fixée directement sur la première partie du circuit ou par une première pièce intermédiaire et la troisième extrémité est fixée directement sur la deuxième partie du circuit ou par une pièce intermédiaire qui est la première pièce ou une deuxième pièce.

10. Panneau vitré lumineux selon l'une quelconque des revendications précédentes **caractérisé en ce que** le profilé comporte la deuxième aile, et il comprend des moyens d'étanchéité à l'eau liquide du système de câblage, entre la base et la tranche de couplage, notamment une colle ou une mousse , en particulier du silicone.

11. Panneau vitré lumineux selon l'une quelconque des revendications précédentes **caractérisé en ce qu'**il comprend un élément isolant électrique entre la tranche de couplage et la première extrémité et de préférence un autre élément isolant électrique entre la tranche de couplage et la troisième extrémité.

12. Panneau vitré lumineux selon l'une quelconque des revendications précédentes **caractérisé en ce que** le profilé est métallique, la deuxième extrémité est entre la première aile et la première région d'interconnexion sur la première face principale externe et un isolant électrique est entre la première aile et la deuxième extrémité et de préférence la quatrième extrémité est entre la première aile et la deuxième région d'interconnexion sur la première face principale externe et un autre isolant électrique est entre la première aile et la quatrième extrémité.

13. Panneau vitré lumineux selon l'une quelconque des revendications précédentes **caractérisé en ce que** le vitrage est monolithique et comporte uniquement ladite première feuille de verre minéral trempé.

14. Panneau vitré lumineux selon l'une des revendications précédentes **caractérisé en ce qu'**il forme une tablette, une étagère, une tablette de réfrigérateur.

15. Paroi de meuble, notamment réfrigéré, ou murale apte à intégrer le panneau vitré lumineux selon l'une des revendications précédentes **caractérisée en ce qu'**elle comporte un premier moyen conducteur apte à être en contact électrique avec la première région libre.

16. Paroi de meuble selon la revendication 15 **caractérisée en ce que** le premier moyen conducteur est un premier ergot, de préférence de maintien du panneau, métallique ou métallisé, saillant de la face intérieure de la paroi, en particulier paroi latérale ou paroi de fond de meuble.

17. Paroi de meuble selon la revendication 15 **caractérisée en ce que** le premier moyen conducteur est dans une rainure (201) de la paroi.

18. Meuble comportant des première et deuxième parois latérales et un fond de meuble, la première paroi, et même la deuxième paroi et/ou le fond de meuble est selon l'une des revendications 15 à 17.
